Europäisches Patentamt

(19) European Patent Office

Office européen des brevets

(11) Publication number: **0 454 606 A2**

## (12) EUROPEAN PATENT APPLICATION

(21) Application number: **91480042.0**

(22) Date of filing: **07.03.91**

(51) Int. Cl.⁵: **G06F 9/32, G06F 9/38**

(30) Priority: **23.04.90 US 513462**

(43) Date of publication of application:
**30.10.91 Bulletin 91/44**

(84) Designated Contracting States:
**DE FR GB**

(71) Applicant: **International Business Machines Corporation**
**Old Orchard Road**
**Armonk, N.Y. 10504 (US)**

(72) Inventor: **Jones, Gardner Dulany**
**4711 Tanglewood Dr.**
**Raleigh, North Carolina 27612 (US)**

(74) Representative: **Bonneau, Gérard**
**Compagnie IBM France Département de Propriété Intellectuelle**
**F-06610 La Gaude (FR)**

(54) **Digital processor with a pipelined architecture permitting an improved concurrent processing of multiple applications.**

(57)   The invention relates to a digital processor with a pipelined architecture using a loop control method permitting programming "do loops" having no in-loop overhead processing cycle requirement. It is implemented utilizing three hardware registers (18, 19, 20) and control logic circuits that contain the parameters controlling the limits of number of iterations for the process loop being executed. The three control registers (18, 19, 20) constitute a sharable resource that can be used in an interrupt-driven, concurrent task processing architecture that provides for the programming loop control parameters to be stored in software, each software task having its own associated and dedicated loop control parameters. The single set of control registers are loaded or saved and restored from memory, thus maintaining a sharable control resource for utilization by numerous processing tasks. Multiple applications may be processed concurrently with the loop control parameters being shifted into and out of the registers from and to data memory to preserve them in dedication to their own process tasks.

EP 0 454 606 A2

FIG. 3

This invention relates to digital processors in general and specifically to a digital processor with a pipelined architecture permitting an improved concurrent processing of multiple applications. Such a processor is usually associated with A to D or D to A (Lease), digital filtering, Fourier transforms, voice analysis or synthesis, music synthesis or servo control mechanisms, to name but a few applications of digital signal processors.

More specifically, this application deals with an improved iterative or "loop" process control architecture, method and apparatus employed in a digital signal processor.

Digital signal processors are now employed in a variety of applications. As such, these processors are architecturally designed for the high speed, repetitive or iterative operations normally associated with analog to digital and digital to analog conversions, servo control, digital signal filtering, modems, voice or music synthesis or analysis and the like. In such systems, high speed streams of digital samples of analog signals are frequently encountered and the samples are treated by a variety of mathematical operations in the course of performing transformations or synthesis as called for by the specific application involved.

Numerous digital processors are available in single chip implementations and sold commercially. Among these are the Texas Instrument Corporation's TMS320C25, the Motorola DSP56000 and the National Semiconductor LM32900. These designs, enhance the overall performance of the digital processor by utilizing a pipelined architecture.

However, as is well known to those skilled in this art, pipelined architectures create inefficiencies in execution of test and branch sequences that are necessary in implementing iterative processing loops referred to as "do loops". Loop overhead of machine cycles results from such sequences. Also the loop control practiced in these prior art devices employs hardware register stacks.

The typical prior art approach to controlling "do loops" is to load a hardware loop control register array with the parameters for a given task, there being numerous sets of these control registers in a stack. The topmost set of registers of these stacks contain the present set of loop control parameters which are active and those beneath it in the stack contains the parameters for loops previously begun and interrupted or suspended prior to completion. In the typical prior art, the three registers are stacked 15 levels deep to accommodate nesting of loops and context switching of the applications that may be run. However, this type of architecture does not suit itself for multi-task or concurrent processing as will be discussed in the following paragraphs.

Hardware control register stacks have an advantage in that single task processes are simplified. Saving the processor control parameters at an interrupt or subroutine call or an embedded loop is simply a matter of pushing the content of registers down into the cascaded stack of registers and loading new control parameters into the active topmost registers. A single "push" instruction stores the control parameters. The normal parameters are the current address, the loop starting address and the remaining loop count and the loop ending address. A simple "pop" instruction reinstates these parameters when the pending operation is resumed.

In this prior design, the assumption is that the demands of the task such as its interrupt rate and the number of its nested loops are well known and the task itself has been written to efficiently use the finite depth resources of the register stack. However, a significant problem arises if the resources or depth of the stack are exceeded. This creates a stack or overflow situation that creates its own resource interrupt and part or all of the contents of the stack must be stored to, and later reloaded from, memory. This operation becomes extremely inefficient because the stack must then have a continuous monitor function, such as a programmed software monitor, and its own control and interrupt procedure.

Furthermore, in a dynamically loadable, multi-tasking environment, the demands on a hardware stack are not known precisely in advance because the number and composition of the tasks within the processor may be changed from time to time. As the stack management becomes more unwieldy, the system inefficiencies become significant. Further, as task parameters are "pushed" into the stack deeper and deeper, the resource becomes mixed since the stack content will contain segments of many tasks that may be running within the processor over a period of time. When a given task is taken from the system, its parameters in the stack must also be cleared. Also, the amount of stack depth must have sufficient system resource in the form of memory for relocating the contents of the stack during overflows, and the amount of the memory resource will not be known in advance but must be changed as the number of tasks running in the system is changed.

All of these aforementioned difficulties lead to a requirement and desire to provide an improved architecture and method of operation for these processors.

It is therefore an object of the present invention to achieve an improved throughput efficiency in a processor with minimum instruction memory usage and high flexibility.

Yet another object of the invention, is to reduce the signal instruction overhead required for implementing loop nesting, conditional branch and context switching types of operation in a multi-tasking or interrupt driven system.

Yet another object of the invention is to provide an improved digital processor that permits concurrent processing of multiple applications having loop or iterative routines, each application or task having its own dedicated parameter storage in memory.

The foregoing and still other objects of the invention not specifically enumerated are met in the improved architecture and method of operation of the preferred embodiment herein. The preferred embodiment simplifies control of the iterative process parameters and avoids the uncertainty of stack depth requirements by utilizing a hardware stack, one parameter deep, within which tasks and stacking loads are dynamically changed by software upon the occurrence of interrupts or suspensions. In the preferred embodiment, the loop or iterative process control is made part of the sequencer function of the architecture of the processor itself. Three 16-bit hardware registers and their associated control logic circuitry are employed. The loop control logic circuitry provides necessary functions of testing the end of the loop, branching to the starting point of the iterative instructions and keeping count of the remaining number of times that the loop is to be executed. The three control registers comprise a loop starting address register, a loop ending address register and a loop count register. The registers may be loaded from data memory or from the same sources and using the same instruction formats as any other registers in the processor. Commands such as "load immediate" or "register transfer" can cause the loading of the registers from the contents of a designated area in memory or from some other designated register in the processor. Similarly, the contents of the registers can be stored into data memory or transferred to other registers. This transfer capability allows loop or iterative process control parameters to be saved in memory upon the occurrence of an interrupt for restoration after the interrupt has been processed. This is usually encountered in multi-tasking or so-called "concurrent processing" of multiple tasks.

The loop control registers, in combination with the usual instruction address register, control the execution of the "do loops". Instructions of the form "Do Label, K" (where "Label" is any do loop name or address) followed by the first instruction in the processing loop, the second instruction and so forth up to the last instruction which bears the name "Label",. This is accomplished utilizing the instruction address register which contains the current address of an instruction being fetched from the instruction memory. Whenever the current address is found to be equal to end of loop address stored in the end of loop address register, then the loop count value is decremented by one. When the current address and the end of loop address are equal and the contents of the loop count register are not zero, the next instruction address to be executed is forced to be equal to the loop starting address and loop execution iterates through another cycle. At each cycle through the loop the count in the loop control register is decremented by one at each occurrence of the end address in the loop. When the loop count equals zero, it signifies that the loop has been completed through the prescribed number of iterations. When the do loop or iterative process sequence has been completed, normal execution by accessing the next address in the instruction address register is resumed.

The foregoing objects are met in a preferred embodiment of the invention which is further illustrated and described with respect to the drawings in which:

Figure 1 illustrates the high level architectural arrangement of the primary elements and their interconnection for data processing in a signal processor architecture of a three phase pipelined sort and including the loop control of the preferred embodiment hereof.

Figure 2 illustrates the form of a typical loop instruction and loop instruction sequence.

Figure 3 illustrates in greater detail the loop parameter control register and control logic architecture of the preferred embodiment.

Figure 4 illustrates schematically the flow of processes in a three phase pipelined processor during a loop or iterative process example.

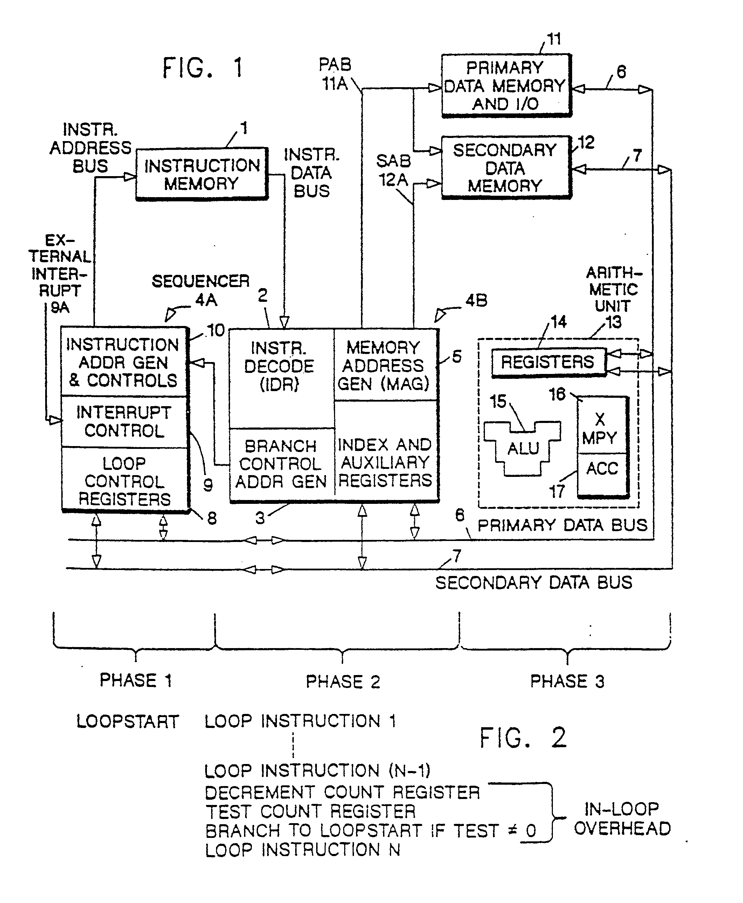

A block diagram of the improved signal processor architecture apparatus and its schematic flow is shown in Figure 1. Three primary functional elements are involved. A sequencer (4A) is the first element. It controls instruction addressing in the instruction memory (1). Second is a data address generator (4B) for the main memories and/or I/O devices, and third is an ALU (13), or Arithmetic Logic Unit, for execution of the instructions. The ALU also is associated with a multiplier and an accumulator. These basic hardware elements are operated concurrently in time and independently of one another to achieve a three phased pipeline data flow processor architecture. Instruction execution is segmented in time across three separate operations or phases as follows:

Phase 1 is denominated the "fetch" phase. During this phase the address for the next instruction to be fetched from the instruction memory is generated while the instruction memory is accessed to obtain the instruction whose address had been previously generated.

Phase 2, denominated the "instruction decode/branch" phase follows. Operations conducted during this phase include decoding of the instruction fetched at a preceding phase 1 from the instruction memory, generation of "branch to" addresses, data memory addresses or I/O addresses (for two data buses in this embodiment) and execution of the branch instruction if one is found, i.e. a "branching to" the indicated address.

Phase 3, denominated the "transfer and compute" phase, includes the transfer of data to or from main memory or I/O units utilizing the addresses generated during phase 2 period.

Phase 3 involves the transfer of data to or from addresses and any computation of results utilizing the ALU, multiplier, and the data buses.

Phases 1, 2 and 3 are contiguous periods of time delineated by a constant frequency "clock", usually a crystal oscillator and a phase-locked timing system which is applied to all the clocked elements in the processor architecture. The clock and its signal interconnection to the ALU, the registers, instruction memory, data memory, etc. have not been shown for simplicity since these structures and clocking of the elements are well known in the art. The three contiguous phases in the three phase pipelined processor architecture thus create an instruction decode and execution sequence in which a first instruction is fetched at phase 1, decoded at phase 2 and executed at phase 3. The phases themselves are separate and independent as are the elements of the architecture.

Thus, once phase 1 is completed for a first instruction and phase 2 for that instruction begins, a new phase 1 can be initiated for a succeeding instruction. This process continues in logical fashion with beginning of execution of phase 3 for a first instruction, a decoding of a second instruction at phase 2 and the-fetching of still another instruction in a phase 1 occurring concurrently. In this process, the first fetched instruction will be in its "execution" phase while the second fetched instruction is in its "decode phase" and the third fetched instruction is in its "fetch" phase. In this manner, during any one clock interval, three instructions are in various stages of processing, one instruction being in each of the three phases of the pipelined system.

A three-fold increase in throughput over that required for a single instruction machine is therefore achieved. This is well-known and is described in great detail in US patent 4,794,517. As is described, instructions involving arithmetic operations, register loads, transfers and stores are completed on the end of the third phase of the pipelined sequence. Branch instructions, however, are completed at the ending of phase 2 in the pipelined operation and for such instructions phase 3 has no significance.

While significant performance advantages are achieved utilizing a pipelined architecture, the architecture itself creates certain anomalies in particular processing operations. These arise because particular operations or instructions are affected by the presence of the pipeline and are processed differently than they would be if the processor were not in a pipeline structure. Branches and interrupts are particularly affected as shall be seen in greater detail later.

As described above, branch address computation is completed during phase 2 of the three phase pipelined operation and the resulting address is supplied to the sequencer for use in accessing the instruction memory.

In Figure 1, three equal phases of the pipelined operation are schematically marked off at the bottom of the figure. These correlate vertically with the primary components of the architecture aligned above these segments or phases. Branch address generation is performed during phase 2 as shown in Figure 1 and the resulting address is supplied to the sequencer for accessing the instruction memory. Instruction memory 1 receives instruction address requests over the instruction address bus connecting the memory to the instruction address generator and controls 10. It supplies the instructions which are thus accessed over the instruction data bus to the instruction decode register 2. The instruction decode register operates during phase 2 of each instructions sequence and may result in the detection of a branch condition by the branch control and address generator 3 which supplies the "branch to" address to the instruction address generator and control 10. The sequencer comprises the instruction address generator and control 10, the interrupt control logic 9 and the loop control register structure 8. External interrupt signals are supplied by 9A to the interrupt control 9. The sequencer is generally designated as 4A in Figure 1. The interrupt mechanism itself is not shown, but a standard interrupt approach is utilized. Both software and hardware interrupts may be used with hardware interrupts being initiated by external signals applied to the interface 9A of the processor. Each signal lead, if activated, forces the instruction address register contained, as will be seen, within the instruction address generator and controls 10 to a specific address set in the interrupt control block 9 or an address of a specific location in the instruction memory 1 where that level of interrupt service resides. An interrupt mask register is used to defer further interrupts until a particular interrupt service has been completed. Software interrupts may be initiated by branching to the particular address where the interrupt service routines are stored in the instruction memory 1. In a similar manier, any further interrupts may be deferred by masking utilizing a mask register in the interrupt control 9 while the software initiated interrupt is being serviced. These are all conventional interrupt operations well-known to those of skill in the processor art and are not described further here as they are widely documented in publicly available references; indeed, any conventional interrupt structure for this purpose may be employed.

Continuing with a general description of the overall processor architecture in Figure 1, the memory address generator is desigiated as 4B and the index and auxiliary registers utilized for aiding in address generation and control for transfer among registers are designated as 5. The primary address bus, abbreviated as PAB, is designated as 11A while the primary data memory and/or I/O system is designated as 11. A secondary data memory may be addressed by either the primary address bus PAB 11A or by the secondary address bus SAB 12A. It is designated as secondary data memory 12 in Figure 1. Bidirectional data buses for the primary data memory and I/O BUS 6 and for the secondary data memory BUS 7 interconnect the index and auxiliary registers 5, the working arithmetic registers 14 and, though not shown, the ALU 15 and the multiplier and accumulator 16 and 17 as well as the loop control registers 8. The buses are under control of the clocked output of the data memories 11 and 12 and of the interfacing registers schematically depicted as connected to the buses 6 and 7 in Figure 1 as is conventional in processor architectures. The arithmetic and logic unit is designated as a block 13 in Figure 1 for simplicity.

In Figure 2, the execution of a branch instruction and a processor having a three phased pipeline such as that of the preferred embodiment is depicted. The figure illustrates a direct branch operation in which the branch address is contained in the immediate fields or contents of the instruction being decoded and does not require access to another instruction or memory. Because of the three phased pipeline architecture, the instruction which follows that containing the branch will always be executed. In practice, as shown in Figure 2, this instruction can be part of the sequence of instructions in a given loop (provided the process loop has at least three instructions) or it can be an instruction, which is independent of the branch decision in the case of a conditional branch, or it can simply be a no-op instruction. In prior art structures, loop control was done utilizing a test and branch sequence to determine whether the loop or instruction sequence was to be traversed again or had finished.

As illustrated in Figure 2, this results in a three processor cycle loop overhead. The sequence is shown in Figure 2 in which a register is used to contain the loop count, i.e. the desired number of iterations of the process loop. The loop count register is decremented at the end of each traverse of the instruction sequence or loop and then is tested for a zero condition. A conditional branch instruction follows the test and will return the sequence to its starting instruction if the count has not reached zero. When the test results in a zero count, the loop or sequence terminates and the next sequential instruction will be executed. In Figure 2 the instruction that follows the branch instruction is used as the last element in the loop sequence as a way of improving throughput in the three phase pipelined system. The three instruction cycles denominated "decrement count register", "test count register" and "branch to loop start if test does not equal zero" represent processing overhead that directly results from the use of a test and branch sequence in determining if a loop has been completed a sufficient number of times.

The efficiency achieved with this type of approach is illustrated in Table 1 in which the in-loop overhead is shown to be a major factor in reducing the loop efficiency, especially during short loops.

| INSTRUCTIONS IN LOOP | TOTAL INSTRUCTIONS EXECUTED | LOOP EFFICIENCY |
|---|---|---|
| 1 | 4 | 25% |
| 3 | 6 | 50 |
| 7 | 10 | 70 |
| 27 | 30 | 90 |

A practical solution that has previously been used to avoid the reduced throughput with short loops is to duplicate the active instruction count in the loop until the loop overhead is insignificant. While this increases the loop throughput it does so at the expense of the increased instruction memory and longer instruction sequences and therefore longer execution time for the sequence. In order to achieve a high arithmetic throughput, this prior in-loop control approach has to be abandoned and a more efficient loop control adopted in the preferred embodiment described herein.

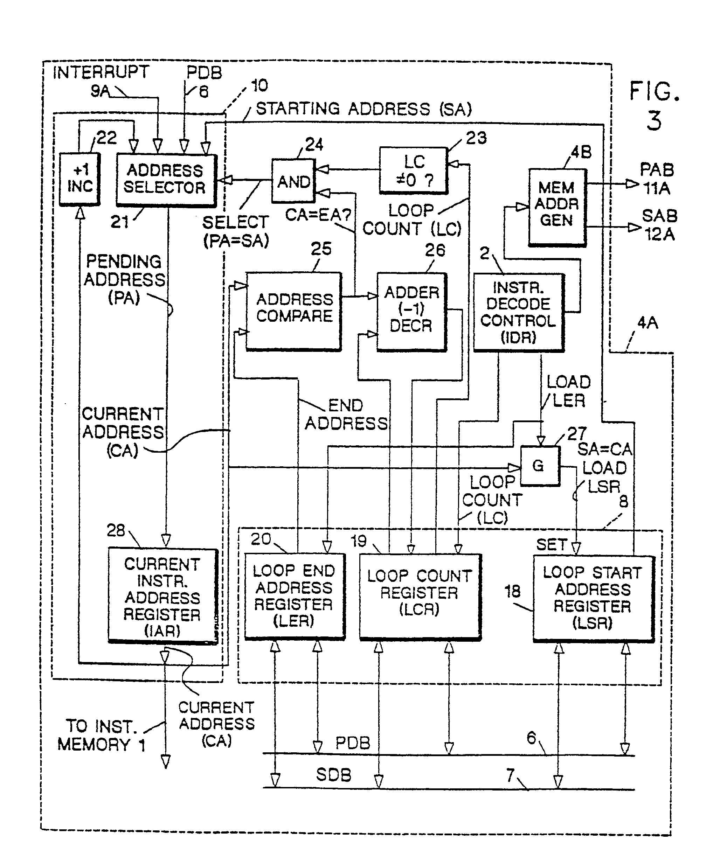

In the preferred embodiment, the loop or iterative sequence control within the processor is made a part of the sequencer function. It is implemented by three, 16-bit registers together with their associated logic and control circuitry. These are hardware registers and are shown in greater detail in Figure 3. In Figure 3, the loop logic control circuitry provides the functions necessary for testing for the end of the loop, the branching to the starting instruction and the iteration count. With these functions implemented in hardware and logic circuitry, do loops or processing sequence loops may be implemented with no in-loop instruction overhead.

Figure 3 shows a block diagram of the loop control circuit and its functions. The 16-bit control registers are designated as follows:

A loop starting register (LSR) 18 contains the address of the first, or starting, instruction for the loop or instruction sequence. The address of this instruction is called the starting address or (SA). The second register is the loop ending address register (LER) 20. It contains the address of the last instruction in the sequence which forms the iterative loop. This address is called the ending address or EA. Finally, a loop count register (LCR) 19 contains the remaining number of iterations required through the processing loop. The loop count is abbreviated LC and represents the remaining number of times that the instruction loop must be executed.

Registers 18, 19 and 20 may be loaded from data memory or from the same sources and utilizing the same instruction formats that any other register in the processor may use such as "load immediate", "register transfer", etc. Similarly, the contents of these registers may be stored to data memory 11 or 12 over the buses 6 and 7 by a transfer operation thereto. The contents of the registers may also be transferred to other registers by appropriate instruction. The transfer capability allows iterative control parameters to be saved in the memory on the occurrence of an interrupt and restored from the memory into the registers when the interrupt has been processed. This is an ideal condition for multi-tasking or multi-processing functions since a single store transfer or restore transfer can be used to save or reset the register contents at will. This provides great flexibility for interrupt processing in a given loop, for processing an imbedded loop, or for an incoming interrupt to do another task entirely. Each task may have its loop control parameters stored with it or in a designated section of the data memory 11 or 12. This eliminates the necessity of a multiple level control register stack as utilized in the prior art.

The loop control registers 18, 19 and 20, in combination with the instruction address register 28 (IAR) control the execution of processing the "do loops". That is, instruction contents of the form:

"Do label, K" (where "label" is any loop name or address) will be followed by the first instruction in the loop, the second instruction in the loop, etc. until the last instruction in the loop which is given the name or address "label".

Turning to Figure 3 again, this operation is described as follows. First, the IAR 28 will contain the current address CA which is the address of the instruction being fetched from the instruction memory 1 of Figure 1. Whenever the current address CA is found to be equal to the end of loop address EA contained in register 20, the loop count value contained in the loop count register 19 will be decremented by one. This may be seen in Figure 3 where the current address CA is compared with the end address EA in the comparator 25 whose output indicates equivalence of the end address to the current address. When this occurs, the adder 26, which is actually a subtract one (or decrement), provides an output to decrement the loop count register 19. The content of the loop count register 19 is continuously compared to see if it equals zero in the comparator 23 as shown.

When the current address and the end address are equal and the remaining loop count tests in comparator 23 to be not zero, the next instruction address to be selected from the instruction memory 1 is forced, by logic circuit AND gate 24 to the address selector 21, to be selected equal to the starting address which is provided by the loop start address register 18 to the address selector 21. This causes the next address to be accessed in the instruction memory to be the starting address of the processing loop.

The loop count LC is decremented on each occurrence of the end address until the loop count finally equals zero, signifying that the iterations through the process loop have been completed. On the last iteration when the current address equals the end address and the loop count has been decremented to zero, the comparator 23 will provide no output to the AND gate 24 which will therefore not provide the selection signal to the address selector 21. Thus, the address selector 21 will utilize the content of the current instruction address register IAR 28, incremented by one in the incrementor 22 for generating the next address to be selected as the pending address for the instruction memory 1. Once the loop count register 19 reaches zero, it is prevented from further decrementing if a further match of the current address and the ending address should occur (wrap around in the loop count register is blocked at assembly or logic from AND gate 24 output can be used to inhibit further decrementing of 19).

This precaution is necessary since it prevents false initialization of the loop sequence. This could occur if the end loop instruction happens to be "branched to" by another sequence outside of the original loop.

No unique instruction formats are utilized in this architecture for initiating iterative do loops. Rather, a loop is begun or generated by load instructions that set operands into the three control registers 18, 19 and 20. Once the starting address and ending address are set in their appropriate registers 18 and 20, respectively, the loop is initiated by loading the loop count register LCR 19 with a value other than zero. This operation may be done by any instruction that places data on the memory buses 6 or 7 such as a load from memory, a load immediate or a register transfer. In any case, the transfer mechanism of the buses interconnected with the registers which form the loop control data storage and the data memories 11 or 12 and/or other registers constitute the transfer mechanism for carrying out this operation. The data to be loaded is transferred from the data buses 6 or 7 to the loop count register 19.

To simplify the operation so that a single instruction can load all three registers, a unique decode action and logic are included in the circuitry in Figure 3. Any instruction that results in a load to the loop end address register 20 will also cause an automatic loading of the current address from the instruction address register 28

7

to the loop start register 18. This action, although not coded as a separate instruction, causes the address in the instruction address register 28 to become the loop start address in the register 18. This loading takes place at the end of the decode phase 2 of the instruction that explicitly loads the loop end address register 20. This will be described further with reference to another figure.

When the loop ending register has been loaded with a loop end address, the loop starting address has automatically been set at the next sequential address in the instruction list. This enables all three loop control parameter registers to be set and established using a single dual load instruction that sets the contents of the LCR 19 and the LER 20. The setting of the LSR 18 takes place also for single transfers to the loop end address register 20. Maximum throughput and flexibility are achieved when the loop operation is interrupted and the parameters are stored back into the data memory 11 or 12.

The control actions described herein can be seen from the following illustration Table 2

## TABLE 2

| INSTRUCTION ADDRESS | INSTRUCTION CONTROL | LOOP CIRCUIT CONTROL |
|---|---|---|
| SA-1 | MEM(Ri)_>LABEL_>LER; MEM(Rj)_>K_>LCR | IAR_>LSR=SA |
| SA | First Instruction in Loop | |

LE=LABEL  Last Instruction in Loop

In Table 2, MEM(Rj)—>K—>LCR denotes that a parameter, K, is taken from the data memory 11 or 12 utilizing an address derived from the index register 5 at Rj and loaded in the register 19 LCR.

Described above are the control actions that occur when a loop is initiated and actually runs to completion. It is also necessary that a loop control be able to be interrupted or stopped and then restored whenever an interrupt occurs or when loops are nested together logically. For these cases, the loop control registers 18, 19 and 20 have their contents stored into the data memory 11 or 12 in the same manner as in the other processor registers. When a loop is resumed, the loop parameters are then reloaded from memory to the control registers. When this is done, however, the loop start address SA for register 18 must be explicitly loaded into LSR 18 since some portion of the iterative loop would have been run prior to interruption, it would be inappropriate to reset the starting address back to the beginning of the loop. It must be restored to wherever it was in the loop when the interruption occurred. A second instruction accomplishes this by explicitly loading the LSR 18 with the correct value from memory for the "starting address", or rather "resumption address", in the loop.

Software "push" and "pop" macro instructions operate to control the flow to and from the data memory.

The "push" macro would be a load instruction for LSR to memory and another instruction LER to memory, LCR to memory, which is a dual load instruction. Then the next do loop or iteration can be begun as a result of an interrupt by initializing the registers either from memory or from exterior loading to process a nested or another loop.

The "pop" instruction which removes saved parameters from memory takes two instructions also, one a dual load instruction to restore the LER and the LCR and another to load the LSR with the contents from memory. These "macros", or prestored microroutines, are translated by the machine into the instructions and machine operations necessary to accomplish push and pop stack operations in memory in a well-known fashion.

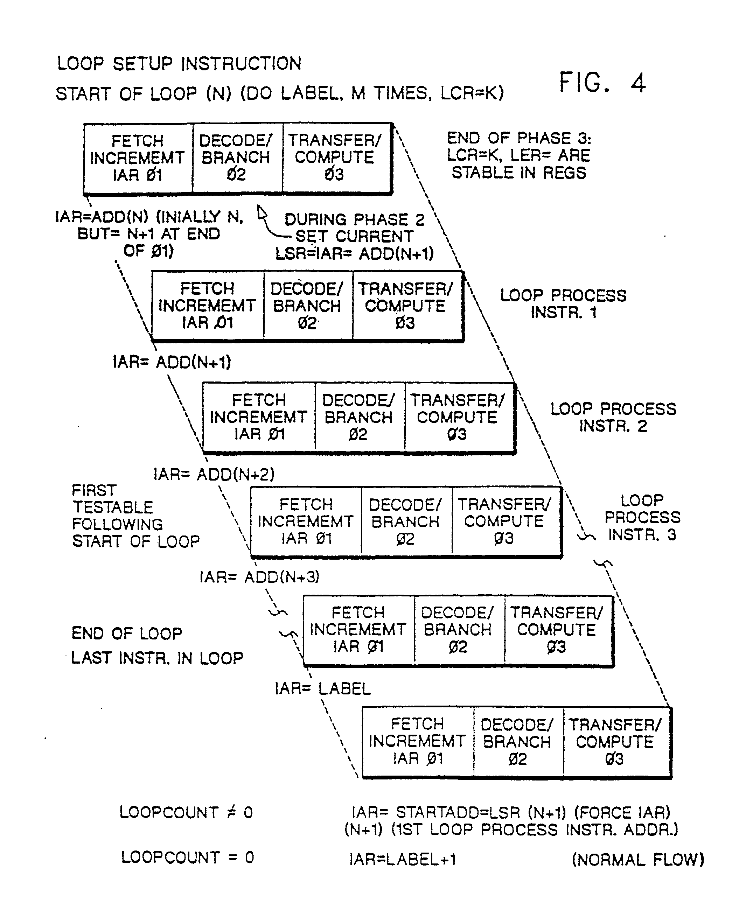

Turning to Figure 4, the pipeline effects in some of the operation may be described in greater detail. As shown in Figure 4, the parameters necessary for controlling the loop sequence are set at the end of the instruction which loads the loop address,register LER., Because of the three phase processor pipelire architecture, two instructions following the load LER instruction will be executed and will not be testable by the loop test circuitry because the transfer and compute action of the first instruction will not have been completed until at least two more instructions have been fetched (one of which will also have been decoded). That is, if either of the instructions following the first instruction which caused the loading of the LER were the only or the last instruction in the loop, they would not be detected in' a test conducted immediately because the ending address would not have been set into the LER at the time they were fetched or decoded from instruction memory. So long as the processing loop contains three or more instructions, this causes no concern in a three phase pipelined design.

In general, if the instruction loop is N and the number of pipelined phases is N, no problem arises. This is not the case, however, in all conditions. Thus, extra consideration must be made when the loop is coded and is known to be less than three instructions in length. Ample techniques exist for handling this occurrence. In general, (for a three-phase-pipelined system) the loop control will be active at the third instruction after the instruction which set the last loop parameter. At that time, all parameters to measure loop execution are established and are therefore testable in the three control registers. Care must be taken to insure,that all of the parameters-defining the loop are established before the first end of loop,address can possibly occur in the instruction cycle.

This can be accomplished by utilizing no-op instructions to fill the intervening pipeline cycles before the loop parameters are firmly established in the registers. This does add to loop setup overhead but does not affect the end loop processing efficiency. These effects are the general properties of,any pipelined architecture and are not the result of the loop control approach. Loop controls utilizing hardware stacks as is the prior art experience the same anomalies in pipeline data flows.

The strategy of loop control in the preferred embodiment uses a simple hardware configuration and relies on programming to provide the stacking necessary to maintain the loop parameters for nesting and context switching. The push and pop macros referred to above accomplish the push and pop operations required for software stacking in a well-known fashion. The push instruction referred to previously is a two instruction sequence for storing the current loop parameters in data memory prior to starting an embedded loop. This may also occur for servicing and interrupt. Similarly, the pop instruction loads the pending parameters of a pending innerloop once the currently executing loop has been completed, i.e. the pop instruction restores previously saved parameters from memory to the control registers. Push and pop macros can be automatically added to an instruction sequence by an assembler in a manner well known in the art or they may be directly coded by the one writing a program for loop execution.

The efficiency of this method of loop control may be compared with that achieved in the prior art hardware stack operation. Table 3 follows.

## TABLE 3

| PRESENT PREFERRED LOOP CONTROL | | HARDWARE LOOP CONTROL | |
|---|---|---|---|
| INSTRUCTIONS | CYCLES | INSTRUCTIONS | CYCLES |
| PUSH | 2 | DO LABEL1, k | 2 |
| DO LABEL1, k | 1 | LOOP INST. 1 | < |
| LOOP INST. 1 | < | | |
| | kN | | kN |
| LABEL1 LOOP INST. N | < | LOOP INST. N | < |
| POP | 2 | LABEL1 ENDO | 1 |

CYCLES EXECUTED = 5 + kN      CYCLES EXECUTED = 3 + kN

LOOP EFFICIENCY = 100 $\frac{KN}{5+KN}$      LOOP EFFICIENCY = 100 $\frac{KN}{3+KN}$

EXAMPLE: FOR N = 4 AND k = 16,

LOOP EFFICIENCY = 93%      LOOP EFFICIENCY = 96%

In one of the prior art architectures referred to above, the push function automatically occurs whenever a "do" instruction is executed. The pop function is accomplished by a "endo" instruction. Table 3 compares the number of machine cycles necessary for performing a nested loop utilizing the preferred embodiment's loop control approach with the corresponding number of machine cycles necessary for the hardware register stack approach of the prior art.

As Table 3 illustrates, loop efficiencies are approximately equal for the two approaches, particularly when the number of iterations grows and the number of instructions in the loop exceed more than a few, i.e. more than two or three. Table 3 does not include additional processing cycles necessary in the hardware approach whenever the hardware stack becomes overloaded or overruns occur.

It may be seen that the loop control approach of the preferred embodiment achieves a throughput approximately equivalent to that achieved with the prior art hardware stack approach, but requires much less hardware. More importantly, the preferred embodiment provides greater system flexibility by permitting a variety of loop control strategies to be implemented in software.

Of particular interest, the preferred embodiment approach permits individual software loop stacks to be associated with each task in a multi-tasking processing environment. In the preferred embodiment, the "stack" is always in software. Each task may have its own stack. As the memory requirements for the stack are well known (because they relate only to that single specific task) resource allocation is made an easy task. Furthermore, since the stack is part of the memory allocation for the task, it is a directly manageable one. The stack is established whenever the task is loaded into instruction memory and is discarded when the task is no longer necessary for execution. This greatly simplifies the task of stack management as opposed that that which occurs in a hardware stack as referred to at the outset hereof.

The preferred embodiment may be viewed as a one-level hardware stack having an efficient software interface. This means that registers may be stored into memory and restored from memory in a minimum number of execution cycles. The advantage is that a minimum of hardware is used and, more importantly, the minimum number of execution cycles exists to let the stack be used with minimum impact on system performance as shown by Table 3 above. In a multi-tasking system, the efficiency with which tasks can be switched is a critical performance parameter, as those skilled in the art will readily appreciate. In addition, there are many instances in which a single-level hardware parameter stack can be used without interface to memory, chiefly where interrupt rates are low and nested iterative loops are not employed. For these circumstances, the preferred embodiment is an optimal one.

## Claims

1. A digital processor having a pipelined architecture comprising an arithmetic logic unit (ALU) (15), a multiplier, a data memory (11, 12), data memory address busses and data buses (6, 7), a memory address generator (5), an instruction memory (1), instruction memory address and data buses, and an instruction memory address generator (10), control logic and registers (14) for controlling fetching, decoding and execution of instructions from the instruction memory and/or for movement of data to or from memory and/or registers; said processor being characterized in that it comprises :

   control data storage means (18, 19, 20) for storing control indicia for processing loops, said control indicia comprising a loop starting value, a loop ending value and a loop repetition value,

   a current instruction address storage means (28) containing the instruction address of the next process instruction to be executed by said processor,

   a data memory means containing control indicia data values,

   data transfer means interconnecting said data memory means with said control data storage means, and

   means connected to said data memory means, said control data storage means, said data transfer means and to said current instruction address storage means for loading said control data storage means with indicia values for said loop ending value and loop repetition value from said data memory means and for loading said loop starting value from said current instruction address storage means.

2. The processor according to claim 1, further comprising:

   interrupt means (9A) for signalling an interrupt condition, and,

   means connected with said interrupt means and with said instruction address generator (10) and with said control data storage means (18, 19, 20) and with said data transfer means, for transferring said control indicia to said data memory means over said data transfer means in response to said interrupt means and for restoring said control indicia to said control data storage means from said data memory means over said data transfer means at the end of operations invoked by said interrupt, thereby resuming processing of the loop process interrupted.

3. The processor according to claim 2, wherein said data memory means stores and reads out said control indicia in a last in, first out stacking operation.

4. The processor according to claim 1, 2 or 3, further including means for detecting loading of said loop ending indicia value and, responsive to said detection, loading said current instruction address into said control data storage means as the said indicia value for said loop starting value.

5. A method of processing loop control functions in a digital processor having an ALU, a multiplier, a data memory, data memory address busses and data buses, a memory address generator, an instruction memory, instruction memory address and data buses, and an instruction memory address generator, control logic and registers for controlling fetching, decoding and execution of instructions from the instruction memory and/or for movement of data to or from memory and/or registers; said method being characterized by the step of :

    storing in control memory means, indicia for indicating the processing loop ending instruction address and the desired number of processing loop repetitions,

    storing the current instruction address into control memory means as an indicia for indicating the starting address for said processing loop, and

    detecting said storing of said processing loop ending instruction address, said storing of said current instruction address being responsive to said detecting step.

6. The method according to claim 5 further comprising the steps of:

    detecting an interrupt condition, and

    transferring said control indicia to said data memory means in response to said detecting.

7. The method according to claim 6, further comprising the steps of storing said control indicia in said data memory means in a last in, first out operation.

8. The method according to claim 5, 6 or 7, further including the steps of:

    detecting loading of said loop ending indicia value and, responsive thereto, and

    loading said current instruction address into said control data storage means as said indicia value for said loop starting address.

FIG. 1

FIG. 2

PHASE 1     PHASE 2     PHASE 3

LOOPSTART    LOOP INSTRUCTION 1

LOOP INSTRUCTION (N-1)
DECREMENT COUNT REGISTER
TEST COUNT REGISTER
BRANCH TO LOOPSTART IF TEST $\neq 0$
LOOP INSTRUCTION N

IN-LOOP OVERHEAD

FIG. 3

LOOP SETUP INSTRUCTION

START OF LOOP (N) (DO LABEL, M TIMES, LCR=K)   FIG. 4

| FETCH INCREMEMT IAR Ø1 | DECODE/ BRANCH Ø2 | TRANSFER/ COMPUTE Ø3 |

END OF PHASE 3: LCR=K, LER= ARE STABLE IN REGS

IAR=ADD(N) (INIALLY N, BUT= N+1 AT END OF Ø1)

DURING PHASE 2 — SET CURRENT LSR=IAR= ADD(N+1)

| FETCH INCREMEMT IAR Ø1 | DECODE/ BRANCH Ø2 | TRANSFER/ COMPUTE Ø3 |

LOOP PROCESS INSTR. 1

IAR= ADD(N+1)

| FETCH INCREMEMT IAR Ø1 | DECODE/ BRANCH Ø2 | TRANSFER/ COMPUTE Ø3 |

LOOP PROCESS INSTR. 2

IAR= ADD(N+2)

FIRST TESTABLE FOLLOWING START OF LOOP

| FETCH INCREMEMT IAR Ø1 | DECODE/ BRANCH Ø2 | TRANSFER/ COMPUTE Ø3 |

LOOP PROCESS INSTR. 3

IAR= ADD(N+3)

END OF LOOP
LAST INSTR. IN LOOP

| FETCH INCREMEMT IAR Ø1 | DECODE/ BRANCH Ø2 | TRANSFER/ COMPUTE Ø3 |

IAR= LABEL

| FETCH INCREMEMT IAR Ø1 | DECODE/ BRANCH Ø2 | TRANSFER/ COMPUTE Ø3 |

LOOPCOUNT ≠ 0     IAR= STARTADD=LSR (N+1) (FORCE IAR)
                  (N+1) (1ST LOOP PROCESS INSTR. ADDR.)

LOOPCOUNT = 0     IAR=LABEL+1          (NORMAL FLOW)